# DEMANDE DE BREVET EUROPEEN

(11) **EP 4 019 803 A1**
(43) Date de publication de la demande: **29.06.2022**
(21) Numéro de dépôt: 21214080.0
(22) Date de dépôt: 13.12.2021
(51) Int. Cl.: F16F 15/121, F16D 13/38

(54) **DISQUE D'EMBRAYAGE À BRAS FLEXIBLES**

(30) Priorité: 15.12.2020 FR 2013273
(71) Demandeur: VALEO EMBRAYAGES, 80009 Amiens (FR)
(72) Inventeur: LOPEZ-PEREZ, Carlos, 28947 FUENLABRADA (ES)
(74) Mandataire: Valeo Powertrain Systems

(57) **Abrégé**

L'invention concerne un disque d'embrayage (100) pour un véhicule automobile comprenant
-un organe d'entrée (10) comprenant un disque de friction (11) apte à être pincé par un mécanisme de transmission tel qu'un mécanisme d'embrayage ou un limiteur de couple,
-un organe de sortie (20) comprenant un moyeu (21) apte à transmettre un couple à un arbre de transmission tel qu'un arbre d'entrée de boite de vitesse,
-un amortisseur de torsion (5) comportant un premier élément (1) et un deuxième élément (2) mobiles en rotation l'un par rapport à l'autre autour de l'axe de rotation (X); et au moins deux bras flexibles (14) fixés à l'un parmi le premier élément (1) et le deuxième élément (2),
caractérisé en ce que le premier élément (1) de l'amortisseur de torsion (5) est solidaire en rotation de l'organe d'entrée (10) par rapport à l'axe de rotation X et le deuxième élément (2) de l'amortisseur de torsion (5) est solidaire en rotation du moyeu (21) par rapport à l'axe de rotation X ou bien accouplé à celui-ci par l'intermédiaire d'un pré-amortisseur additionnel.

## Description

L'invention se rapporte au domaine disques d'embrayage et des amortisseurs de torsion pour véhicule automobile.

### Arrière-plan technologique

Les moteurs à explosions ne génèrent pas un couple constant et présentent des acyclismes provoquées par les explosions se succédant dans leurs cylindres. Ces acyclismes génèrent des vibrations qui sont susceptibles de se transmettre à la boîte de vitesses et d'engendrerainsi des chocs, bruits et nuisances sonores, particulièrement indésirables. Afin de diminuer les effets indésirables des vibrations et améliorer le confort de conduite des véhicules automobiles, il est connu d'équiper les transmissions de véhicule automobile avec des amortisseurs de torsion.

Les amortisseurs de torsion comportent un premier élément et un deuxième élément mobiles en rotation autour d'un axe de rotation commun et des organes de transmission élastiques pour transmettre le couple et amortir les acyclismes de rotation entre le premier élément et le deuxième élément. Ces amortisseurs sont généralement dotés de ressorts hélicoïdaux qui ne sont pas complètement satisfaisant car l'amortissement proposé offre peu de débattement angulaire, et peut générer des frottements parasites à haut régime. De plus, avec ce type d'amortisseur, il est difficile de faire varier la raideur angulaire en fonction du débattement angulaire relatif entre le premier élément et le deuxième élément.

Le document FR3002605 divulgue un disque d'embrayage doté d'un pré-amortisseur doté de bras flexibles. Ces bras flexibles n'interviennent dans la filtration des vibrations qu'à très bas régime, en particulier au ralenti, et ne permettent de transmettre un couple que très faible (moins de 15 N.m). Le disque d'embrayage est doté de ressorts hélicoïdaux pour amortir les cyclismes à des couples plus importants. Comme expliqué précédemment, ces ressorts hélicoïdaux ne sont pas totalement satisfaisants.

Pour augmenter le débattement angulaire, il est connu de disposer les ressorts hélicoïdaux en série. Ces systèmes sont parfois appelés LTD (Long Travel Damper). Les ressorts disposés en série peuvent subir des efforts centrifuges importants à haut régime, ce qui occasionne des frottements parasites néfastes pour l'amortissement.

Le document FR3008152 divulgue un double volant amortisseur dans lequel les organes de transmission élastiques sont formés avec deux bras flexibles qui sont reliés à un corps central fixé à l'un des premier et deuxième éléments. Chaque bras flexible coopère avec un suiveur de came porté par l'autre des éléments d'entrée et de sortie et est agencée de telle sorte que, pour un mouvement relatif entre l'élément d'entrée et l'élément de sortie, de part et d'autre d'une position angulaire relative de repos, le suiveur de came se déplace le long du bras flexible et, ce faisant, exerce un effort de flexion sur le bras flexible. Par réaction, chaque bras flexible exerce sur le suiveur de came respectif une force de rappel qui tend à ramener les éléments d'entrée et de sortie vers leur position angulaire relative de repos. La flexion des bras flexibles permet ainsi d'amortir les vibrations et irrégularités de rotation entre l'élément d'entrée et l'élément de sortie tout en assurant la transmission du couple entre lesdits éléments d'entrée et de sortie. Ce double volant amortisseur est apte à transmettre un couple important mais la forme des bras flexibles nécessite un espace radial assez important, incompatible avec l'espace radial disponible dans un disque d'embrayage.

### Résumé

Un aspect de l'invention vise à résoudre les problèmes exposés ci-dessus et permet de mettre en œuvre dans un espace radial limité, notamment radialement à l'intérieur des garnitures de friction d'un disque d'embrayage, un amortisseur compact transmettant un couple important (supérieur à 200N.m), offrant un débattement angulaire important (supérieur à 40 degrés) sans frottement parasite. Un aspect de l'invention vise aussi à concevoir un disque d'embrayage capable d'accueillir un amortisseur principal à bras flexibles.

Selon un premier aspect de l'invention, l'invention fournit un disque d'embrayage pour un véhicule automobile comprenant :
- un organe d'entrée comprenant un disque de friction apte à être pincé par un mécanisme de transmission tel qu'un mécanisme d'embrayage ou un limiteur de couple,
- un organe de sortie comprenant un moyeu apte à transmettre un couple à un arbre de transmission tel qu'un arbre d'entrée de boite de vitesse,
- un amortisseur de torsion autorisant une rotation relative entre l'organe d'entrée et l'organe de sortie selon un axe de rotation X, ledit amortisseur de torsion comportant un premier élément et un deuxième élément mobiles en rotation l'un par rapport à l'autre autour de l'axe de rotation X; et au moins deux bras flexibles comportant chacun une portion statique fixée sur l'un parmi le premier élément et le deuxième élément et une portion flexible, chaque portion flexible présentant un chemin de roulement coopérant avec un rouleau associé à l'autre parmi le premier élément et le deuxième élément de manière à transmettre un couple et amortir les acyclismes de rotation entre le premier élément et le deuxième élément; chaque bras flexible étant agencé de telle sorte que, pour un mouvement rotatif relatif entre les premier et deuxième éléments par rapport à une position angulaire relative de repos, le rouleau se déplace sur le chemin de roulement associé et exerce un effort de flexion sur le bras flexible produisant conjointement une force de réaction apte à rappeler les premier et deuxième éléments vers ladite position angulaire relative de repos.

Selon l'invention, le premier élément de l'amortisseur de torsion est solidaire en rotation de l'organe d'entrée par rapport à l'axe de rotation Xet le deuxième élément de l'amortisseur de torsion est solidaire en rotation du moyeu par rapport à l'axe de rotation X ou bien accouplé à celui-ci par l'intermédiaire d'un pré-amortisseur additionnel.

Autrement dit, le premier élément de l'amortisseur de torsion est solidaire en rotation du disque de friction.

Ainsi l'amortisseur à bras flexibles est disposé de manière à filtrer le couple transmis par le disque de friction en direction du moyeu. L'amortisseur à bras flexibles peut ainsi être utilisé en tant qu'amortisseurde torsion principal du disque d'embrayage et est configuré pour amortir un couple de transmission important, notamment supérieur à 200 N.m.

On entend par portion statique une portion du bras flexible maintenue sur le premier élément ou le deuxième élément de sorte qu'elle ne se déforme pas et ne se déplace pas par rapportaudit premier élément ou deuxième élément supportant le bras flexible. On entend par portion flexible, une portion libre de se déplaceret/ou se déformer élastiquement.

Le disque d'embrayage peut comporter aussi une ou plusieurs des caractéristiques suivantes :
La partie statique de chaque bras flexible est montée rigidement sur l'un parmi le premier et le deuxième élément.

Chaque rouleau est monté mobile en rotation autour d'une tige s'étendant le long d'un axe Y, chaque tige étant fixée sur l'autre parmi le premier élément et le deuxième élément.

Selon un mode de réalisation, la tige est soudée sur l'autre parmi le premier élément et le deuxième élément. Pour ce faire, une extrémité de la tige est introduite dans un orifice de l'autre parmi le premier élément et le deuxième élément et le contour de l'extrémité de la tige est soudé au bord de l'orifice.

Chaque rouleau est disposé radialement à l'extérieur du chemin de roulement qui lui est associé.

Chaque chemin de roulement est situé sur une face radialement externe de la portion flexible du bras flexible correspondant. Une telle disposition permet de retenir radialement le bras flexible lorsqu'il est soumis à la force centrifuge. En outre, cette disposition permet une augmentation de la raideurdu bras flexible sous l'effet de la force centrifuge.

Les rouleaux sont répartis régulièrement autour de l'axe de rotation X Lorsqu'il comporte exactement deux rouleaux, les deux rouleaux sont disposés, par rapport à l'axe de rotation X, à 180 degrés l'un de l'autre. De même les rouleaux sont situés à la même distance de l'axe de rotation X

Les rouleaux sont agencés chacun radialement à l'intérieur d'une portion statique de bras flexible.

Une partie de chaque bras flexible recouvre radialement, d'un même côté de l'axe de rotation X, une partie d'un autre bras flexible. Autrement dit, il existe un rayon passant par l'axe de rotation X et traversant, d'un même côté de l'axe de rotation X, deux parties de bras flexibles appartenant à deux bras flexibles distincts.

Il existe aussi un rayon passant par l'axe de rotation Xet traversant, d'un même côté de l'axe de rotation X, à la fois l'un des rouleaux, et deux parties de bras flexibles appartenant à deux bras flexibles distincts.

Dans un plan perpendiculaire à l'axe de rotation X et passant par les bras flexibles, il existe deux portions d'un même bras flexible disposées de part et d'autre de l'axe de rotation X et coupées par une droite D passant par l'axe de rotation X

L'amortisseur comprend exactement deux bras flexibles et chaque bras flexibles s'étend, dans la position relative de repos de l'amortisseur, autour de l'axe de rotation (X) le long d'un secteur angulaire supérieur à 190 degrés, de préférence supérieur à 220 degrés, notamment supérieur 250 degrés.

Chaque bras flexible comprend un coude s'étendant entre la portion statique du bras flexible et le chemin de roulement.

Selon un mode de réalisation, le coude relie la portion statique du bras flexible au chemin de roulement du bras flexible.

Chaque bras flexible comprend une première zone d'extrémité, cette première zone d'extrémité étant libre. Autrement dit la première zone d'extrémité est libre de se déplacer lorsque le bras flexible fléchit.

La portion statique des bras flexibles est située sur une deuxième zone d'extrémité des bras flexibles, opposée à la première zone d'extrémité;

Le chemin de roulement est agencé en totalité ou en partie sur la première zone d'extrémité, notamment sur une face du bras tournée radialement vers l'extérieur.

Dans la position relative de repos, un rayon coupe, d'un même côté de l'axe de rotation X, le chemin de roulement d'un bras flexible, le rouleau coopérant avec ce chemin de roulement, et la portion statique d'un autre bras flexible.

Selon un mode de réalisation, dans la position relative de repos, une partie de chaque rouleau se situe dans un creux formé radialement à l'intérieur d'une portion statique de bras flexible. Plus précisément un premier rouleau coopérant avec le chemin de roulement du premier bras flexible se situe dans un creux formé radialement à l'intérieur de la portion statique du deuxième bras flexible. Ainsi l'encombrement radial est réduit.

De même, une concavité est formée radialement à l'intérieur de la portion flexible des bras flexibles. Cette concavité est telle que, dans au moins une position angulaire relative de l'amortisseur, notamment dans la position angulaire relative de repos, une portion du moyeu pénètre dans cette concavité. Ainsi le packaging radial de l'amortisseur est particulièrement optimisé.

Selon un mode de réalisation, le bras flexible présente le long de cette cavité une section plus petite. En particulier, la dimension du bras prise dans le plan perpendiculaire à l'axe de rotation X et perpendiculairement à la fibre neutre du bras flexible a une épaisseur réduite le long de la concavité.

La concavité peut être formée partiellement ou totalement grâce à cette réduction de section. La concavité peut s'étendre le long d'une portion du bras flexible sur laquelle s'étend également le chemin de roulement. La concavité peut être disposée sur la première zone d'extrémité du bras flexible.

La concavité et le chemin de roulement sont situés sur deux faces du bras flexible radialement opposées. Autrement dit, il existe au moins un rayon passant par l'axe de rotation X, et coupant à la fois, d'un même côté de l'axe de rotation, une partie de la concavité et le chemin de roulement.

Le premier élément peut comprendre un voile.

Le voile s'étend radialement du moyeu jusqu'au garnitures du disque de friction.

Lorsque l'amortisseur a seulement deux bras flexibles, le voile peut avoir une forme sensiblement rectangulaire s'étendant de la portion statique de l'un des bras flexibles à la portion statique de l'autre des bras flexibles.

Le deuxième élément comprend un flasque s'étendant dans un plan perpendiculaire à l'axe de rotation X

Le flasque comprend au moins deux bras s'étendant radialement, chaque bras portant une tige autourde laquelle le rouleau est monté mobile en rotation.

Chaque bras flexible est fixé sur ledit un parmi le premier élément et le deuxième élément au moyen d'une pluralité d'organes de fixation, chaque organe de fixation traversant d'une part un trou ménagé dans ledit un parmi le premier élément et le deuxième élément et d'autre part un trou ménagé dans la portion statique de l'un des bras flexibles.

Selon un mode de réalisation, les organes de fixation sont des rivets.

Selon un mode de réalisation chaque rivet comprend un collet intercalé axialement entre ledit un parmi le premier élément et le deuxième élément, et la portion statique du bras flexible.

Ce collet permet d'ajuster la position axiale du bras par rapport à la position axiale des rouleaux tout en renforçant la solidité du rivet.

Selon un autre mode de réalisation, la portion dudit un parmi le premier élément et le deuxième élément supportant les portions statiques des bras flexibles est emboutie en direction des rouleaux. La position axiale relative du bras flexible et des rouleaux peut ainsi être ajustée en fonction de l'importance de l'embouti.

Selon un autre mode de réalisation l'organe de fixation est une vis.

Selon un mode de réalisation, les bras flexibles sont fixés sur le premier élément et les rouleaux sont associés au deuxième élément. Autrement dit, les bras flexibles sont solidaires en rotation de l'organe d'entrée du disque d'embrayage.

De préférence, le disque de friction comprend un disque support, par exemple un disque de progressivité, sur lequel sont montées des garnitures de friction.

Le disque support est riveté sur le voile.

La forme des bras flexibles et leur chemin de roulement peuvent être configurés pour obtenir un amortissement à raideur angulaire (N.m/degré) variable.

De préférence, la raideur angulaire varie de façon progressive, c'est-à-dire sans discontinuité. Avantageusement, l'évolution de la raideur angulaire par rapport à l'angle de débattement angulaire entre le premier élément et le deuxième élément est sensiblement linéaire.

En particulier, la forme des bras flexibles et leur chemin de roulement peuvent être configurés pour obtenir un amortissement dont la raideur angulaire (N.m/degré) est croissante lorsqu'on s'éloigne de la position angulaire relative de repos.

Avantageusement, la forme des bras flexibles 14 et leur chemin de roulement peuvent être configurés pour obtenir une raideur inférieure à 2 Nm/°, en particulier inférieure à 1 Nm/° au voisinage de la position angulaire relative de repos, notamment dans une première plage de débattement angulaire inférieure à 10 degrés, en particulier inférieure à 6 degrés, d'un côté et/ou de l'autre côté de la position angulaire relative de repos. Un tel disque d'embrayage peut ainsi être dépourvu de pré-amortisseur additionnel.

Selon un mode de réalisation, il n'y a pas de précontrainte entre les bras flexibles et les rouleaux dans la position angulaire relative de repos.

Selon un mode de réalisation, la raideur angulaire de l'amortisseur est nulle dans la position angulaire relative de repos et/ou pour un couple inférieurà 5 Nm.

Selon un mode de réalisation, il peut y avoir un jeu entre l'un au moins des bras flexibles et le rouleau associé, dans la position angulaire relative de repos de l'amortisseur et/ou à proximité de cette position angulaire relative de repos.

Lorsque le disque d'embrayage est dépourvu de pré-amortisseur additionnel, le deuxième élément (notamment son flasque) est solidaire en rotation du moyeu.

Le flasque est fixé rigidement sur le moyeu ou formé d'une seule pièce avec le moyeu. Le flasque est situé à une extrémité axiale du moyeu.

L'amortisseur peut autoriser un débattement angulaire total (direct et retro) de plus de 80 degrés, par exemple 90 ou 100 degrés.

De préférence, le débattement angulaire est plus important dans le sens de transmission direct (du moteur vers la boite de vitesse) que dans le sens de transmission rétro (de la boite de vitesse vers le moteur).

Selon une variante, le flasque peut être monté pivotant par rapport au moyeu et un pré-amortisseur doté de moyens élastiques distincts des bras flexibles peuvent être agencés de manière à s'opposer à la rotation relative du moyeu et du flasque.

Le premier élément présente une ouverture centrale et est monté rotatif autour du moyeu.

Selon un mode de réalisation, le disque d'embrayage comprend un élément de guidage monté solidaire en rotation du premier élément sur une portion radialement interne du premier élément, l'élément de guidage étant rotatif autourdu moyeu.

Selon un mode de réalisation, un ajustement entre le moyeu et cet élément de guidage permet de centrer le premier élément par rapport au moyeu. Le diamètre interne de l'élément de guidage est ajusté autour d'un diamètre externe du moyeu.

Selon un mode de réalisation, l'élément de guidage est un insert en plastique surmoulé autour d'une portion radialement interne du premier élément, en particulier du voile. Bien que l'ensemble composé du premier élément et de son insert soient alors rigidement liés et inamovibles l'un de l'autre, on considère parla suite dans un souci de de clarté, que l'insert ne fait pas partie du premier élément.

Avantageusement, l'insert comprend une première paroi s'étendant radialement sur une première face du premier élément, notamment du voile

Avantageusement, l'insert comprend aussi une deuxième paroi s'étendant radialement sur une deuxième face du premier élément (notamment du voile), axialement opposée à la première face.

Avantageusement, l'insert comprend une portion cylindrique qui relie la première paroi et la deuxième paroi, radialement à l'intérieur du premier élément, notamment du voile.

Le premier élément, notamment le voile, comprend des orifices et l'insert comprend des doigts engagés dans les orifices et reliant la première paroi et la deuxième paroi de l'insert.

Le disque d'embrayage peut comprendre aussi un dispositif d'hystérésis.

Le dispositif d'hystérésis comprend une première surface de frottement associée au premier élément et une deuxième surface de frottement associée au moyeu, la première surface de frottement et la deuxième surface de frottement étant disposées de manière à frotter l'une contre l'autre lorsque le premier élément et le moyeu tournent l'un par rapport à l'autre par rapport à l'axe de rotation X

La première surface de frottement est entrainée en rotation par le premier élément. Notamment, la première surface de frottement est solidaire en rotation du premier élément. La première surface de frottement peut être formée directement sur le premier élément, notamment sur le voile. La première surface de frottement peut aussi être formée sur l'élément de guidage.

La deuxième surface de frottement est entrainée en rotation par le moyeu. Notamment, la deuxième surface de frottement est solidaire en rotation du moyeu.

La deuxième surface de frottement peut être agencée sur une première rondelle de frottement, montée solidaire en rotation du moyeu, par exemple par complémentarité de forme non circulaire. La complémentarité de forme peut être obtenu avec des cannelures complémentaires. De façon alternative, le moyeu comprend un premier méplat et la première rondelle de frottement comprend un premier méplat complémentaire sur son contour interne.

Selon un mode de réalisation, le disque d'embrayage comprend une troisième surface de frottement associée au premier élément et une quatrième surface de frottement associée au moyeu, la troisième surface de frottement et la quatrième surface de frottement étant disposées de manière à frotter l'une contre l'autre lorsque le premier élément et le moyeu tournent l'un par rapport à l'autre par rapport à l'axe de rotation X

La troisième surface de frottement est entrainée en rotation par le premier élément. Notamment, la troisième surface de frottement est solidaire en rotation du premier élément. La troisième surface de frottement peut être formée directement sur le premier élément, notamment sur le voile. La troisième surface de frottement peut aussi être formée sur l'élément de guidage.

La quatrième surface de frottement est entrainée en rotation par le moyeu. Notamment, la quatrième surface de frottement est solidaire en rotation du moyeu.

Notamment, la première surface de frottement est formée sur la première paroi de l'insert et la troisième surface de frottement est formée sur la deuxième paroi de l'insert.

La quatrième surface de frottement peut être agencée sur une deuxième rondelle de frottement, montée solidaire en rotation du moyeu.

La deuxième rondelle de frottement peut être doté également sur son contour interne d'un premier méplat complémentaire au premier méplat du moyeu. De façon alternative, un jeu de cannelures complémentaires permet de solidariser en rotation le moyeu et la deuxième rondelle de frottement.

Une rondelle élastique intercalée entre un appui axial solidaire du moyeu et le premier élément presse la première surface de frottement contre la deuxième surface de frottement et le cas échéant, la quatrième surface de frottement contre la troisième surface de frottement.

L'amortisseur est configuré de sorte qu'une zone de butée de la portion flexible de chaque bras flexible s'appuie sur le moyeu lorsqu'un angle prédéterminé séparant la position angulaire relative des premier et deuxième éléments et leur position angulaire relative de repos est atteint. Ainsi, le bras de levier du bras flexible diminue nettement lorsque cet angle prédéterminé est atteint. Ainsi, la raideur élastique angulaire de l'amortisseur augmente nettement lorsque l'angle prédéterminé séparant la position angulaire relative des premier et deuxième éléments et leur position angulaire relative de repos est atteint.

De préférence, la zone de butée du bras flexible est une surface plane et le moyeu comprend pour chaque bras flexible un deuxième méplat coopérant avec la zone de butée du bras flexible lorsque l'angle prédéterminé séparant la position angulaire relative des premier et deuxième éléments et leur position angulaire relative de repos est atteint. Ainsi, la surface de contact peut être augmentée ce qui diminue la pression de contact et diminue l'usure des bras flexibles lors des appuis.

De préférence, l'un au moins des deuxièmes méplats est agencé dans le prolongement d'un premier méplat. Autrement dit, le premier méplat et le deuxième méplat sont agencés sur un même plan.

Le moyeu comprend un premier tronçon autour duquel est monté le premier élément et sur lequel est agencé le dispositif d'hystérésis et le cas échéant, le premier méplat. Le moyeu comporte aussi un deuxième tronçon autour duquel les bras flexibles sont disposés, et sur lequel, le cas échéant, les deuxièmes méplats sont disposés.

Le premier tronçon et le deuxième tronçon sont séparés par un épaulement formé sur le moyeu. Cet épaulement peut servird'appui axial au dispositif d'hystérésis.

Selon un mode de réalisation, le premier élément porte une première butée angulaire et le deuxième élément porte une deuxième butée angulaire, la première butée angulaire et la deuxième butée angulaire étant apte à venir en appui l'une contre l'autre pour limiter la rotation relative entre le premier élément et le deuxième élément.

Selon un autre mode de réalisation, le rouleau peut se déplacerégalementsur un autre chemin de roulement porté parl'autre parmi le premier élément et le deuxième élément. Autrement dit, l'autre parmi le premier élément et le deuxième élément comprend deux chemins de roulement complémentaires disposés chacun en vis-à-vis d'un chemin de roulement d'un bras flexible, chaque rouleau pouvant rouler conjointement sur le chemin de roulement du bras de flexible associé et sur le chemin de roulement complémentaire associé. Ainsi le débattement angulaire de l'amortisseur peut être augmenté et il n'est plus nécessaire de fixer rigidement l'axe de rotation du rouleau sur l'autre parmi le premier élément et le deuxième élément.

L'amortisseur décrit précédemment peut être utilisé dans d'autres applications que les disques d'embrayages, par exemple un double volant amortisseur, un convertisseur de couple, un batteur...Au-delà du domaine des disques d'embrayages, l'invention porte aussi, selon un deuxième aspect, sur un amortisseur de torsion, comportant :
- un premier élément et un deuxième élément mobiles en rotation l'un par rapport à l'autre autour d'un axe de rotation (X);
- deux bras flexibles fixés au premier élément, les bras flexibles comportant chacun une portion statique fixée sur ledit premier élément et une portion flexible, chaque portion flexible présentant un chemin de roulement coopérant avec un rouleau associé au deuxième élément de manière à transmettre un couple et amortir les acyclismes de rotation entre le premier élément et le deuxième élément; chaque bras flexible étant agencé de telle sorte que, pour un mouvement rotatif relatif entre les premier et deuxième éléments par rapport à une position angulaire relative de repos, le rouleau se déplace sur le chemin de roulement et exerce un effort de flexion sur le bras flexible produisant conjointement une force de réaction apte à rappeler les premier et deuxième éléments vers ladite position angulaire relative de repos.

Selon ce deuxième aspect de l'invention, chaque rouleau est disposé radialement à l'extérieur du chemin de roulement qui lui est associé et chaque bras flexible s'étend, dans la position relative de repos de l'amortisseur, autour de l'axe de rotation X le long d'un secteur angulaire supérieur à 190 degrés, de préférence supérieur à 220 degrés, notamment supérieur 250 degrés.

L'amortisseur peut présenter aussi une ou plusieurs des caractéristiques évoquées précédemment dans le cadre d'un disque d'embrayage, notamment :
Chaque bras flexible a, dans un plan perpendiculaire à l'axe de rotation, une forme de C.

Le chemin de roulement de chaque bras flexible est situé radialement plus proche de l'axe de rotation (X) que la portion statique. Autrementdit, chaque bras flexible est fixé radialement par l'extérieur.

Chaque bras flexible a une extrémité libre.

Chaque rouleau coopère avec une portion du bras flexible associé qui est située entre sa portion statique et son extrémité libre.

Chaque extrémité libre est située à l'opposé de la portion statique du bras flexible. Autrement dit la portion statique est située sur l'autre extrémité du bras flexible.

Selon un mode de réalisation, l'amortisseur comprend exactement deux bras flexibles, à savoir un premier bras flexible et un deuxième bras flexible.

L'amortisseur comprend un premier bras flexible et un deuxième bras flexible, un premier rouleau coopérant avec le premier bras flexible et un deuxième rouleau coopérant avec le deuxième bras flexible.

Dans un plan comprenant l'axe de rotation Xet passant par le premier rouleau, notamment par son axe, en particulier lorsque l'amortisseur est au repos, c'est-à-dire lorsqu'aucun couple n'est transmis, le premier rouleau est agencé radialement entre le premier bras flexible et le deuxième bras flexible, et le premier bras flexible est agencé radialement entre l'axe de rotation Xet le premier rouleau.

Dans un plan comprenant l'axe de rotation X et passant par le deuxième rouleau, notamment parson axe, en particulier lorsque l'amortisseur est au repos, c'est-à-dire lorsqu'aucun couple n'est transmis, le deuxième rouleau est agencé radialement entre le premier bras flexible et le deuxième bras flexible, et le deuxième bras flexible est agencé radialement entre l'axe de rotation Xet le deuxième rouleau.

Selon un mode de réalisation, quel que soit la position relative des rouleaux par rapport à leur bas flexible respectif, on a d'une part, dans un plan comprenant l'axe de rotation X et passant par le premier rouleau, le premier rouleau est agencé radialement entre le premier bras flexible et le deuxième bras flexible, et le premier bras flexible est agencé radialement entre l'axe de rotation Xet le premier rouleau ; et d'autre part, dans un plan comprenant l'axe de rotation Xet passant par le deuxième rouleau, le deuxième rouleau est agencé radialement entre le premier bras flexible et le deuxième bras flexible, et le deuxième bras flexible est agencé radialement entre l'axe de rotation X et le deuxième rouleau.

Lorsque l'amortisseur est au repos, c'est-à-dire lorsqu'aucun couple n'est transmis, le premier rouleau est couvert radialement parla portion statique du deuxième bras flexible.

Lorsque l'amortisseur est au repos, c'est-à-dire lorsqu'aucun couple n'est transmis, le deuxième rouleau est couvert radialement parla portion statique du premier bras flexible.

Chaque bras flexible en forme de C présente un premier brin sur lequel est formé la portion statique et un deuxième brin sur lequel est agencé le chemin de roulement, le premier brin et le deuxième brin étant reliés à l'extremum du C.

Le deuxième brin du premier bras flexible est disposé au moins en partie entre le premier brin du deuxième bras flexible et le deuxième brin du deuxième bras flexible. Le deuxième brin du deuxième bras flexible est disposé au moins en partie entre le premier brin du premier bras flexible et le deuxième brin du premier bras flexible.

Le chemin de roulement du premier bras flexible est disposé totalement entre le premier brin et le deuxième brin du deuxième bras flexible et le chemin de roulement du deuxième bras flexible est disposé totalement entre le premier brin et le deuxième brin du premier bras flexible.

L'invention porte aussi, selon un troisième aspect, sur un amortisseur de torsion, comportant un premier élément et un deuxième élément mobiles en rotation l'un par rapport à l'autre autour d'un axe de rotation X; et deux bras flexibles fixés au premier élément, les bras flexibles comportant chacun une portion statique fixée sur ledit premier élément et une portion flexible, chaque portion flexible présentant un chemin de roulement coopérant avec un rouleau associé au deuxième élément de manière à transmettre un couple et amortir les acyclismes de rotation entre le premier élément et le deuxième élément; chaque bras flexible étant agencé de telle sorte que, pour un mouvement rotatif relatif entre les premier et deuxième éléments par rapport à une position angulaire relative de repos, le rouleau se déplace sur le chemin de roulement et exerce un effort de flexion sur le bras flexible produisant conjointement une force de réaction apte à rappeler les premieret deuxième éléments vers ladite position angulaire relative de repos, dans lequel chaque bras flexible est fixé sur le premier élément au moyen d'une pluralité d'organes de fixation, chaque organe de fixation traversant d'une part un trou ménagé dans le premier élément et d'autre part un trou ménagé dans la portion statique de l'un des bras flexibles, les organes de fixation étant des rivets et chaque rivet comprenant un collet intercalé axialement entre le premier élément et la portion statique du bras flexible.

Ainsi, le positionnent relatif axial des bras flexibles et des rouleaux est facilité et le rivet est renforcé.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence auxdessins annexés.
[Fig.1] et [Fig.2] sont deux vues en perspective avant et arrière d'un disque d'embrayage selon un premier mode de réalisation
[Fig.3] est une vue en coupe du premier mode de réalisation.
[Fig.4] et [Fig.5] sont deux vues en coupe agrandies du dispositif d'hystérésis du premier mode de réalisation.
[Fig.6] représente une vue en coupe simplifiée du moyeu et d'une rondelle de frottement du premier mode de réalisation, dans un plan perpendiculaire à l'axe de rotation.
[Fig.7] et [Fig.8] représentent deux vues de faces de l'amortisseur, selon le premier mode de réalisation, dans deux positions angulaires relatives différentes.
[Fig.9] représente une courbe d'amortissement susceptible d'être obtenue avec le premier mode de réalisation.
[Fig.10] représente une variante de réalisation du bras flexible.
[Fig.11 représente une variante de réalisation d'organe de fixation.
[Fig.12] représente une autre variante de réalisation d'organe de fixation.
[Fig.13] représente une autre variante de montage du disque support.
[Fig.14] et [Fig.15] représentent une autre variante d'élément de guidage.

### Description détaillée de modes de réalisation

Dans la description et les revendications, on utilisera les termes "externe" et "interne" ainsi que les orientations "axiale" et "radiale" pour caractériser, selon les définitions données dans la description, des éléments du disque d'embrayage. L'axe X de rotation du disque d'embrayage détermine l'orientation "axiale". L'orientation "radiale" est dirigée orthogonalement à l'axe de rotation X et l'orientation "circonferentielle" est dirigée orthogonalement à l'axe de rotation du disque d'embrayage et orthogonalement a la direction radiale. Les termes "externe" et "interne"sont utilisés pour définir la position relative d'un élément par rapport à un autre, par référence à l'axe X de rotation du disque d'embrayage, un élément proche de l'axe étant ainsi qualifie d'interne par opposition à un élément externe situé radialement en périphérie.

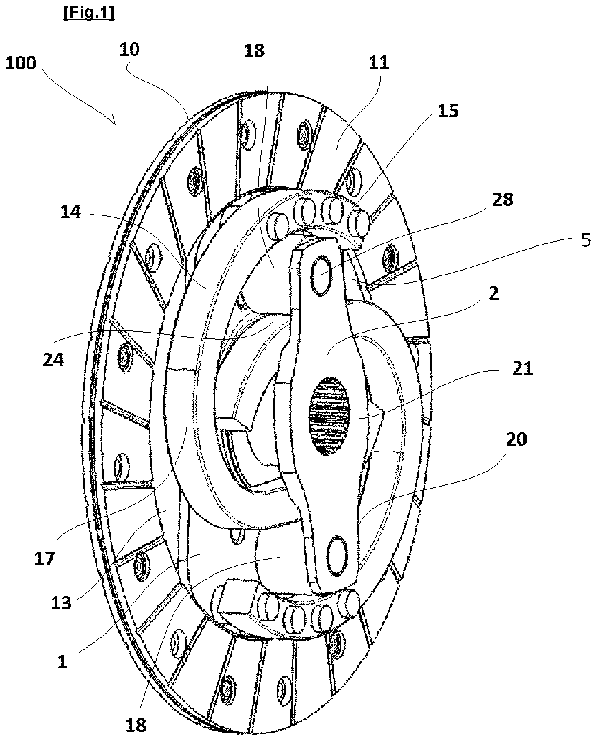

Les figures 1 à 8 présentent un premier mode de réalisation de disque d'embrayage 100 pour un véhicule automobile.

Ce disque d'embrayage comporte
- un organe d'entrée 10 comprenant un disque de friction 11 apte à être pincé par un mécanisme de transmission tel qu'un mécanisme d'embrayage ou un limiteur de couple,
- un organe de sortie 20 comprenant un moyeu 21 apte à transmettre un couple à un arbre de transmission tel qu'un arbre d'entrée de boite de vitesse,
- un amortisseur de torsion 5 autorisant une rotation relative entre l'organe d'entrée 10 et l'organe de sortie 20 selon un axe de rotation X

L'amortisseur de torsion 5 comporte un premier élément 1 et un deuxième élément 2 mobiles en rotation l'un par rapport à l'autre autour de l'axe de rotation X, et deux bras flexibles 14 fixés au premier élément 1.

Les bras flexibles 14 comportent chacun une portion statique 15 fixée rigidement sur le premier élément 1 et une portion flexible 17, chaque portion flexible 17 présentant un chemin de roulement 24 s'étendant le long d'une partie de la portion flexible 17 et coopérant avec un rouleau 18 associé au deuxième élément 2 de manière à transmettre un couple et amortir les acyclismes de rotation entre le premier élément 1 et le deuxième élément 2.

Chaque bras flexible 14 est agencé de telle sorte que, pour un mouvement rotatif relatif entre les premier et deuxième éléments 1, 2 par rapport à une position angulaire relative de repos, le rouleau 18 se déplace sur le chemin de roulement 24 et exerce un effort de flexion sur le bras flexible 14 produisant conjointement une force de réaction apte à rappeler les premier et deuxième éléments 1, 2 vers ladite position angulaire relative de repos.

Le premier élément 1 de l'amortisseur de torsion 5 est solidaire en rotation de l'organe d'entrée 10 par rapport à l'axe de rotation X et le deuxième élément 2 est solidaire en rotation du moyeu 21 par rapport à l'axe de rotation X Autrement dit, le premier élément 1 de l'amortisseur de torsion 5 est solidaire en rotation du disque de friction 11.

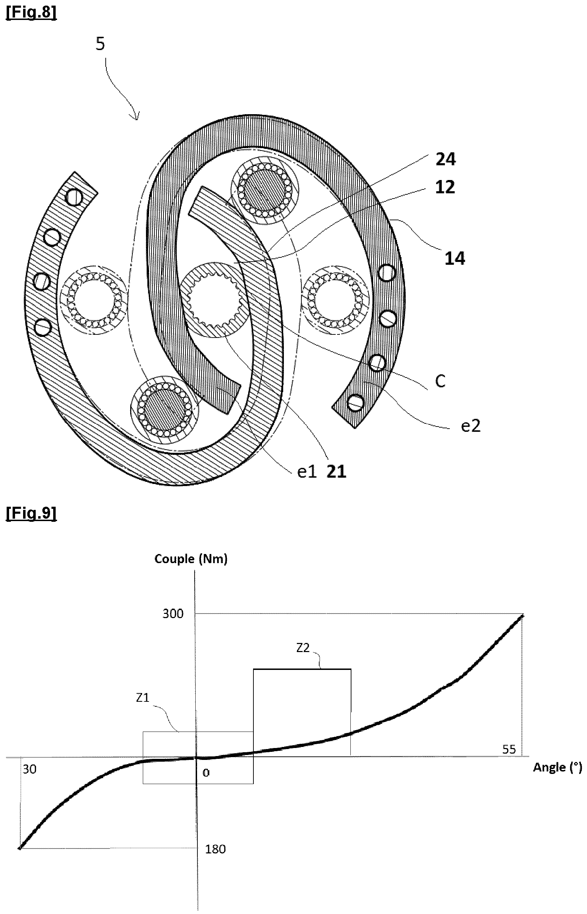

Ainsi l'amortisseur à bras flexibles est disposé de manière à filtrer le couple transmis par le disque de friction en direction du moyeu. L'amortisseur à bras flexibles peut ainsi être utilisé en tant qu'amortisseurde torsion principal du disque d'embrayage et est configuré pour amortir un couple de transmission important, notamment supérieur à 200 N.m, comme on peut le voir sur la courbe caractéristique d'amortissement présentée sur la figure 9.

Dans ce mode de réalisation, ce sont donc les bras flexibles 14 qui sont fixés sur le premier élément 1 et les rouleaux 18 qui sont associés au deuxième élément 2 pour transmettre le couple entre chaque bras flexible 14 et le deuxième élément 2.

La solidarisation en rotation des bras flexibles 14 avec le disque de friction 11 est préférable et plus robuste. Notamment, les zones de fixation peuvent être assez éloignées de l'axe de rotation X, ce qui permet de rendre la fixation plus robuste et d'avoir plus de libertés pour définir la forme des bras flexibles.

Ceci étant, le montage inverse consistant à associer les bras flexibles 14 avec le deuxième élément 2 et les rouleaux 18 avec le premier élément 1 est aussi possible.

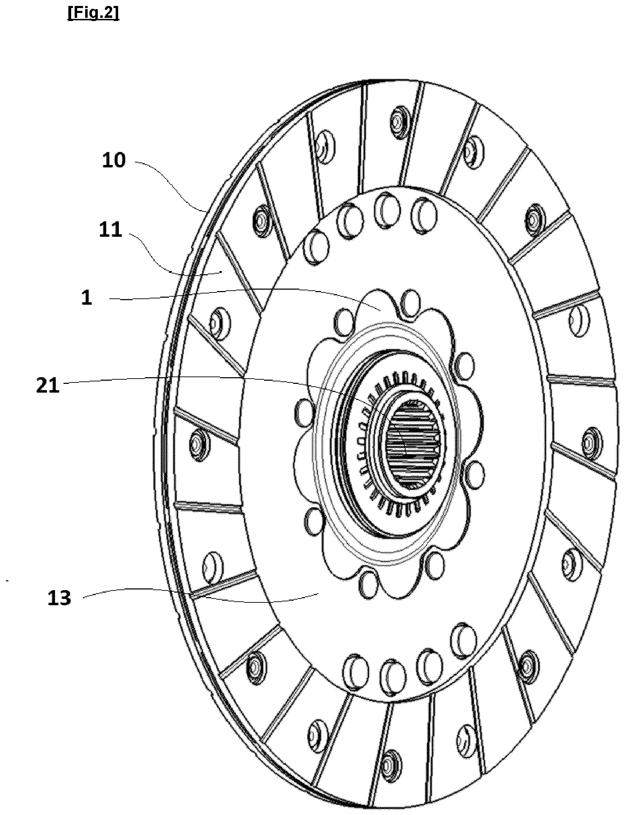

De préférence, le disque de friction 11 comprend un disque support 13, par exemple un disque de progressivité, sur lequel sont montées des garnitures de friction. Le premier élément comprend un voile 1 et le disque support 13 est riveté sur celui-ci. Comme on peut le voir sur la figure 2, le contour radialement interne du disque support 13 peut présenter des ondulations s'étendant autour de l'axe de rotation X et les rivets sont insérés dans les crêtes des ondulations orientées en direction de l'axe de rotation X

Chaque rouleau 18 est monté mobile en rotation autour d'une tige 28 s'étendant le long d'un axe Y. Chaque tige estfixée sur le deuxième élément2. L'axe Y est parallèle à l'axe X

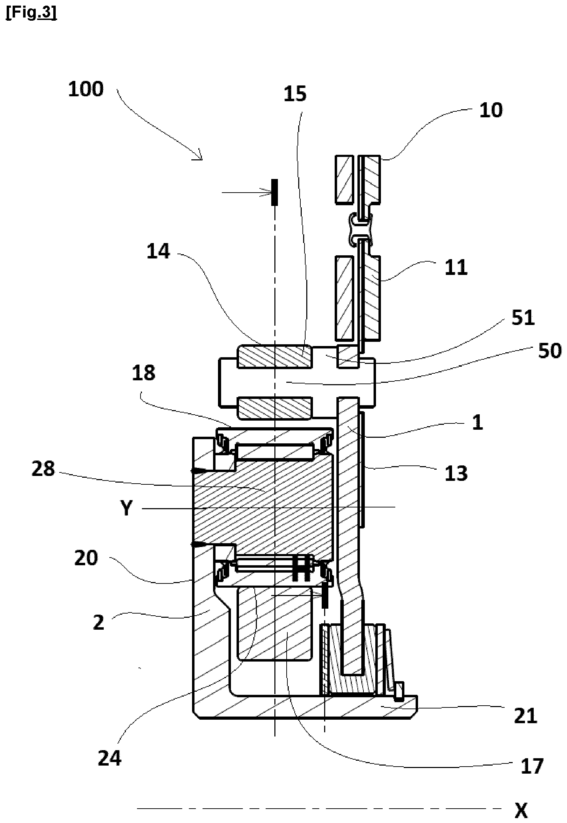

Comme on peut le voir sur la figure 3, la tige est soudée sur le deuxième élément 2. Pour ce faire, une extrémité de la tige 28 est introduite dans un orifice du deuxième élément 2 et le contour de l'extrémité de la tige 28 est soudé au bord de l'orifice.

Chaque rouleau 18 roule radialement à l'extérieur du chemin de roulement 24 qui lui est associé.

Chaque chemin de roulement 24 est donc situé sur une face radialement externe de la portion flexible 17 du bras flexible 14 correspondant. Une telle disposition permet de retenir radialement le bras flexible 14 lorsqu'il est soumis à la force centrifuge. En outre, cette disposition permet une augmentation de la raideur du bras flexible sous l'effet de la force centrifuge.

Les rouleaux 18 sont répartis régulièrement autour de l'axe de rotation X Les deux rouleaux sont disposés, par rapport à l'axe de rotation X, à 180 degrés l'un de l'autre et à la même distance de l'axe de rotation X

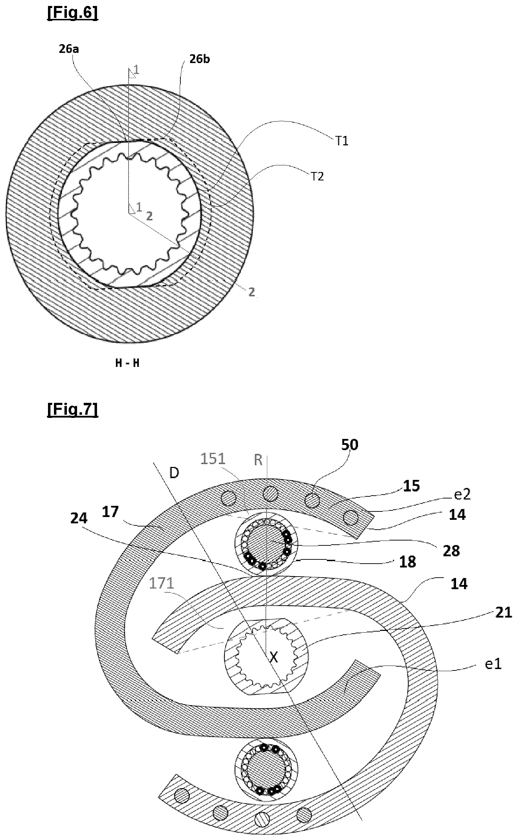

La figure 7 présente une vue de face simplifiée de l'amortisseur, dans un plan perpendiculaire à l'axe de rotation X et passant par les bras flexibles. Dans cette vue simplifiée de la position angulaire relative de repos., seuls les bras flexibles 14 et les rouleaux 18 sont représentés.

On voit que les rouleaux sont agencés radialement à l'intérieur des portions statiques 15 des bras flexibles 14. Une partie de chaque bras flexible 14 recouvre radialement, d'un même côté de l'axe de rotation X, une partie d'un autre bras flexible 14. Chaque bras flexible s'étend autour de l'axe de rotation X le long d'un secteur angulaire supérieur à 270 degrés.

Il existe un rayon R passant par l'axe de rotation X et traversant, d'un même côté de l'axe de rotation X, à la fois l'un des rouleaux 18 et deuxparties de bras flexibles 14 appartenant à deux bras flexibles 14 distincts. Plus précisément, dans la position angulaire relative de repos, ce rayon R coupe, d'un même côté de l'axe de rotation X, le chemin de roulement 24 d'un bras flexible 14, le rouleau 18 coopérant avec ce chemin de roulement 24, et la portion statique 15 de l'autre bras flexible. Il existe aussi deux portions flexibles d'un même bras flexible 14 disposées de part et d'autre de l'axe de rotation X et coupées par une droite D passant par l'axe de rotation X

Chaque bras flexible comprend un coude s'étendant entre la portion statique 15 du bras flexible et le chemin de roulement 24.

Chaque bras flexible 14 comprend une première zone d'extrémité e1. Cette première zone d'extrémité est libre. Autrement dit, la première zone d'extrémité e1 est libre de se déplacer lorsque le bras flexible fléchit, comme on peut le voir sur la figure 8 dans laquelle l'amortisseur est représenté, toujours de façon simplifiée, en position angulaire relative de repos (en traits mixtes) et dans une position angulaire relative de fin de débattement (en traits pleins).

Le chemin de roulement24 est agencé au moins en en partie sur cette première zone d'extrémité e1, notamment sur une face du bras tournée radialement vers l'extérieur.

La portion statique 15 des bras flexibles 14 est située sur une deuxième zone d'extrémité e2 des bras flexibles 14, opposée à la première zone d'extrémité e1.

Chaque bras flexible a, dans un plan perpendiculaire à l'axe de rotation, une forme de C. Chaque bras flexible 14 en forme de C présente un premier brin sur lequel est formé la portion statique et un deuxième brin sur lequel est agencé le chemin de roulement 24, le premier brin et le deuxième brin étant reliés à l'extremum du C. Le deuxième brin du premier bras flexible 14 est disposé au moins en partie entre le premier brin du deuxième bras flexible14 et le deuxième brin du deuxième bras flexible. De même, le deuxième brin du deuxième bras flexible 14 est disposé au moins en partie entre le premier brin du premier bras flexible 14 et le deuxième brin du premier bras flexible 14. Le chemin de roulement24 du premier bras flexible 14 est disposé totalement entre le premier brin et le deuxième brin du deuxième bras flexible 14 et le chemin de roulement 24 du deuxième bras flexible est disposé totalement entre le premier brin et le deuxième brin du premier bras flexible 14.

Dans la position angulaire relative de repos, une partie de chaque rouleau 18 se situe dans un creux 151 formé radialement à l'intérieur d'une portion statique 15 de bras flexible 14. Plus précisément un premier rouleau 18 coopérant avec le chemin de roulement 24 du premier bras flexible 14 se situe dans un creux 151 formé radialement à l'intérieur de la portion statique 15 du deuxième bras flexible 14. Ainsi l'encombrement radial est réduit. De même, une concavité 171 est formée radialement à l'intérieur de la portion flexible 17 des bras flexibles 14. Cette concavité 171 est telle que, dans au moins une position angulaire relative de l'amortisseur, notamment dans la position angulaire relative de repos, une portion du moyeu 21 pénètre dans cette concavité 171. Ainsi le packaging radial de l'amortisseur est particulièrement optimisé. La concavité 171 s'étend le long d'une portion du bras flexible 14 sur laquelle s'étend également le chemin de roulement 24. La concavité 171 et le chemin de roulement 24 sont disposés sur deux faces du bras flexible 14 radialement opposées. Autrement dit, il existe au moins un rayon passant par l'axe de rotation X, et coupant à la fois, d'un même côté de l'axe de rotation, une partie de la concavité 171 et le chemin de roulement 24.

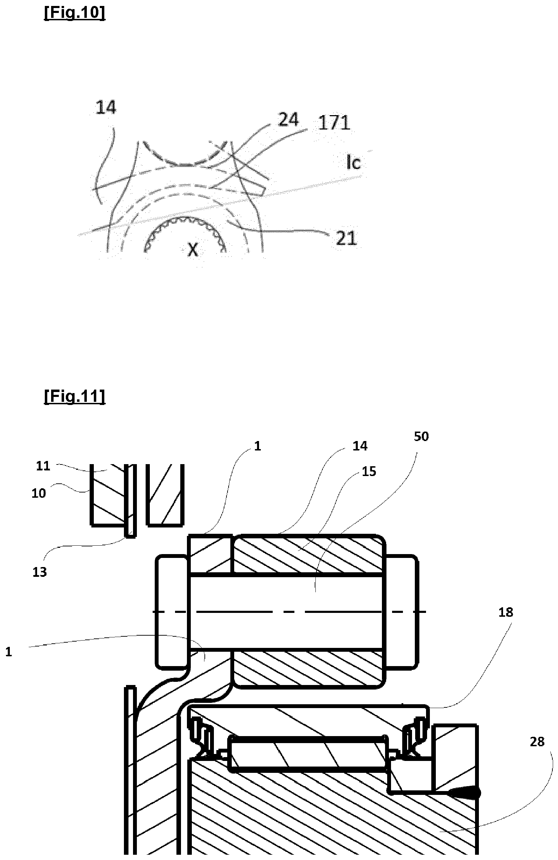

Selon un mode de réalisation représenté figure 10, le bras flexible présente le long de cette concavité 171 une section plus petite. En particulier, la dimension du bras prise dans le plan perpendiculaire à l'axe de rotation Xet perpendiculairement à la fibre neutre du bras flexible a une épaisseur réduite le long de la concavité. La concavité 171 peut être formée partiellement ou totalement grâce à cette réduction de section.

Le voile 1 s'étend radialement du moyeu 21 jusqu'au garnitures du disque de friction. Le voile s'étend dans un plan perpendiculaire à l'axe de rotation X On voit sur la figure 1 que le voile 1 a une forme sensiblement rectangulaire s'étendant de la portion statique 15 d'un premier bras flexible 14 à la portion statique 15 du deuxième bras flexible 14.

Le deuxième élément comprend un flasque 2 s'étendant également dans un plan perpendiculaire à l'axe de rotation X Le flasque 2 comprend deux bras s'étendant radialement, chaque bras portant rigidement une tige 28 (ici par soudage) autour de laquelle le rouleau est monté mobile en rotation. Ici, le disque d'embrayage est dépourvu de pré-amortisseur additionnel. De ce fait, le flasque 2, est solidaire en rotation du moyeu 21. Si l'on se réfère de nouveau à la figure 3, on voit que le moyeu 21 et le flasque 2 sont ici formés d'un seul tenant dans une pièce moulée, par exemple dans une pièce en acier de type C40 ou C45.

Le flasque 2 est situé à une extrémité axiale du moyeu 21 et s'étend radialement vers l'extérieur du moyeu 21.

Chaque bras flexible est fixé sur le voile 1 au moyen d'une pluralité d'organes de fixation 50, chaque organe de fixation 50 traversant d'une part un trou ménagé dans le voile 1 et d'autre part un trou ménagé dans la portion statique 15 de l'un des bras flexibles 14.

Dans ce premier mode de réalisation, les organes de fixation 50 sont des rivets. On peut voir sur la figure 3 que chaque rivet 50 comprend un collet 51 intercalé axialement entre le voile 1 et la portion statique 15 du bras flexible 14. Ce collet 51 permet d'ajuster la position axiale du bras flexible 14 par rapport à la position axiale des rouleaux 18 tout en renforçant la solidité du rivet 50.

Selon un autre mode de réalisation représenté sur la figure 11, la portion du voile 1 supportant les portions statiques 15 des bras flexibles 14 est emboutie en direction des rouleaux 18. La position axiale relative du bras flexible 14 et des rouleaux 18 peut ainsi être ajustée en fonction de l'importance de l'embouti.

Ainsi, que ce soit avec l'embouti ou le collet 51 du rivet 50, on peut ajuster la position axiale des bras flexibles 14 par rapport à la position axiale des rouleaux 18 de sorte que par exemple, chaque bras flexible 14 coopère avec une zone axialement centrale du rouleau 18 qui lui est associé.

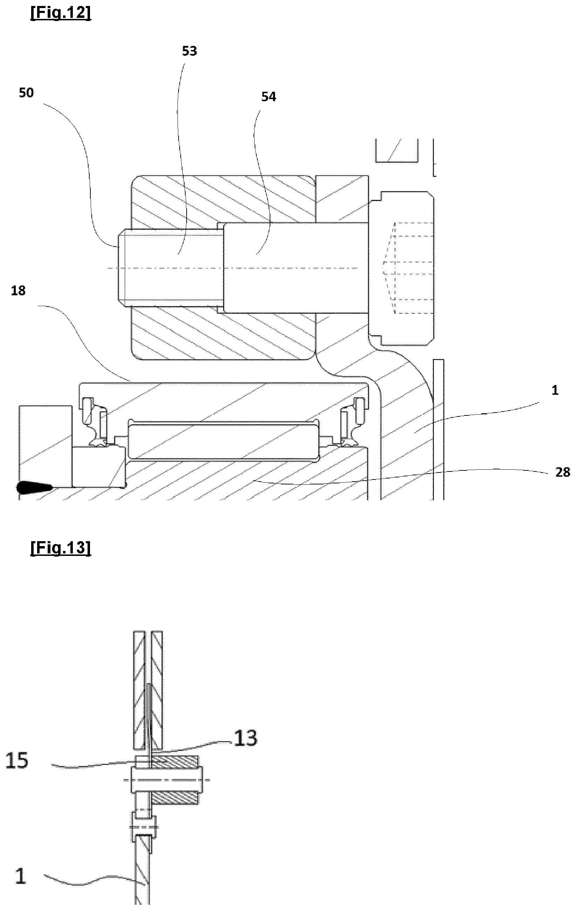

Selon un autre mode de réalisation représenté sur la figure 12, l'organe de fixation 50 est une vis. Les trous de la portion statique 15 des bras flexibles 14 comprennent chacun une première partie taraudée et une deuxième partie par laquelle est introduite la vis. La deuxième partie des trous a un diamètre plus grand que le diamètre externe de la première partie taraudée des trous. La vis comprend une partie filetée 53 coopérant avec la première partie taraudée et une partie cylindrique 54 logée dans la deuxième partie du trou. Comme précédemment, le premier élément est embouti de manière à ajuster la position axiale relative des bras flexibles et des rouleaux 18. La séparation entre la première partie et la deuxième partie de chaque trou est située sensiblement à mi-distance dans la direction axiale du bras flexible 14.

Selon un autre mode de réalisation représenté sur la figure 13, le disque support 13 est intercalé axialement entre le premier élément 1 et les portions statiques 15 des bras flexibles 14.

La forme des bras flexibles 14 et leur chemin de roulement 24 peuvent être configurés pour obtenir un amortissement à raideur angulaire (N.m/degré) variable. Comme on peut le voir sur la figure 9, qui illustre une courbe caractéristique d'amortissement pouvant être obtenue avec un disque d'embrayage selon le premier mode de réalisation, la raideur angulaire varie de façon progressive, c'est-à-dire sans discontinuité. Avantageusement, l'évolution de la raideur angulaire par rapport à l'angle de débattement angulaire entre le premier élément et le deuxième élément est sensiblement linéaire.

En particulier, la forme des bras flexibles 14 et leur chemin de roulement 24 peuvent être configurés pour obtenir un amortissement dont la raideur angulaire (N.m/degré) est croissante lorsqu'on s'éloigne de la position angulaire relative de repos.

Avantageusement, la forme des bras flexibles 14 et leur chemin de roulement 24 peuvent être configurés pour obtenir une raideur inférieure à 2 Nm/°, en particulier inférieure à 1 Nm/° au voisinage de la position angulaire relative de repos, notamment dans une première plage de débattement angulaire Z1 inférieure à 10 degrés, en particulier inférieure à 6 degrés, d'un côté et ou de l'autre côté de la position angulaire relative de repos, et ce jusqu'à un couple d'environ 20 Nm. Un tel disque d'embrayage peut ainsi être dépourvu de pré-amortisseur additionnel. Une façon de réaliser cet amortissement est de monter les bras flexibles et les rouleaux de sorte qu'il n'y ait pas de précontrainte, ou voire qu'il y ait un jeu radial, entre l'un au moins des bras flexibles et un rouleau associé dans la position relative de repos de l'amortisseur et/ou à proximité. Ici, la raideur angulaire est nulle dans la position angulaire de repos.

En s'éloignant de la position angulaire relative de repos, la raideur angulaire augmente progressivement.

Par exemple la raideur peut être comprise entre 1,5 Nm/° et 5 Nm/°, notamment inférieure à 3,5 Nm/° dans une deuxième plage de débattement angulaire Z2 comprise notamment entre 10° et 30 degrés, dans le sens de transmission direct (du moteur vers la boite de vitesse).

Au-delà, la raideur peut dépasser progressivement 5 Nm/° et atteindre par exemple 10 à 20 Nm/° en fin de débattement angulaire.

Un tel amortisseur peut autoriser un débattement angulaire total (direct et retro) de plus de 80 degrés, par exemple 90 ou 100 degrés.

De préférence, le débattement angulaire est plus important dans le sens de transmission direct que dans le sens de transmission rétro. Sur la courbe de la figure 9 le débattement angulaire est d'environ 30 degrés en rétro et d'environ 55 degrés en direct.

Les bras flexibles sont configurés pour transmettre au moins le couple maximum du moteur.

Selon une variante non représentée, le flasque 2 peut être monté pivotant par rapport au moyeu 21 et un pré-amortisseur doté de moyens élastiques distincts des bras flexibles 14 peuvent être agencés circonférentiellement entre le moyeu 21 et le flasque 2 de manière à s'opposer à la rotation relative du moyeu 21 et du flasque 2.

Sur la figure 3, on voit que le premier élément 1 présente une ouverture centrale et est monté rotatif autour du moyeu 21. Le disque d'embrayage 100 comprend un élément de guidage 19 monté solidaire en rotation du premier élément 1 surune portion radialement interne du premier élément 1. L'élément de guidage 19 est monté rotatif autour du moyeu 21.

Dans ce premier mode de réalisation, l'élément de guidage 19 est un insert en plastique surmoulé autour d'une portion radialement interne du premier élément, en particulier du voile. Bien que l'ensemble composé du premier élément 1 et de son insert 19 soient rigidement liés et inamovibles l'un de l'autre, on considère par la suite dans un souci de de clarté, que l'insert ne fait pas partie du premier élément

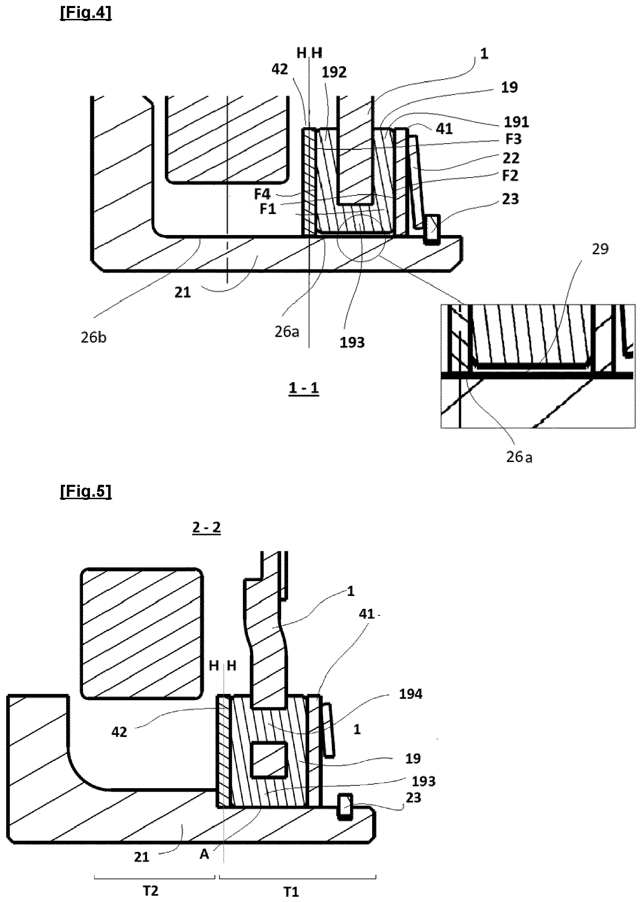

Sur la figure 4, on voit qu'un ajustement A entre le diamètre externe du moyeu 21 et cet élément de guidage 19 permet de centrer le premier élément 1 autour du moyeu 21.

L'insert 19 comprend une première paroi 191 s'étendant radialement sur une première face du voile 1. L'insert comprend aussi une deuxième paroi 192 s'étendant radialement sur une deuxième face du voile 1, axialement opposée à la première face. L'insert 19 comprend une portion cylindrique 193 qui relie la première paroi 191 et la deuxième paroi 192, radialement à l'intérieur du voile 1.

Le voile 1 comprend des orifices et l'insert comprend des doigts 194 engagé dans les orifices et reliant la première paroi 191 et la deuxième paroi 192 de l'insert 19. La première paroi 191 et la deuxième paroi 192 sont agencées chacune dans un plan perpendiculaire à l'axe de rotation Xdu disque d'embrayage.

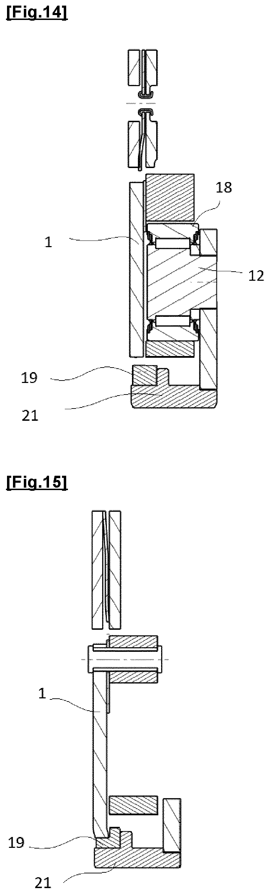

Selon une variante représentée sur les figures 14 et 15, l'élément de guidage 119 peut être une bague rapportée solidarisée en rotation au premier élément 1, par exemple au moyen de dentures ou de rivets. Cette bague de guidage 19 peut également être réalisée en matière plastique.

Le disque d'embrayage 100 comprend en outre un dispositif d'hystérésis.

Le dispositif d'hystérésis comprend une première surface de frottement F1 associée au premier élément 1 et une deuxième surface de frottement F2 associée au moyeu 21. La première surface de frottement F1 et la deuxième surface de frottement F2 sont disposées de manière à frotter l'une contre l'autre lorsque le premier élément 1 et le moyeu 21 tournent l'un par rapport à l'autre par rapport à l'axe de rotation X

Pour ce faire, la première surface de frottement F1 est solidaire en rotation du premier élément 1 et la deuxième surface de frottement F2 est solidaire en rotation du moyeu 21. La première surface de frottement F1 est formée sur la première paroi 191 de l'élément de guidage 19. La deuxième surface de frottement F2 est agencée sur une première rondelle de frottement 41, montée solidaire en rotation du moyeu 21, au moyen d'un premier méplat 26a formé sur le moyeu et d'un premier méplat complémentaire sur le contour interne et la première rondelle de frottement 41.

De façon alternative, la complémentarité de forme pourrait être obtenue avec des cannelures complémentaires.

Dans le premier mode de réalisation, le disque d'embrayage comprend une troisième surface de frottement F3 associée au premier élément 1 et une quatrième surface de frottement F4 associée au moyeu 21, la troisième surface de frottement et la quatrième surface de frottement étant disposées de manière à frotter l'une contre l'autre lorsque le premier élément et le moyeu tournent l'un par rapport à l'autre par rapport à l'axe de rotation X La troisième surface de frottement F3 est solidaire en rotation du premier élément 1 et la quatrième surface de frottement F4 est solidaire en rotation du moyeu 21.

La troisième surface de frottement est formée sur la deuxième paroi 192 de l'insert 19. La quatrième surface de frottement F4 peut être agencée sur une deuxième rondelle de frottement 42, montée solidaire en rotation du moyeu 21, par exemple par complémentarité de forme non circulaire, en particulier au moyen du premier méplat 26a formé sur le moyeu et d'un autre premier méplat complémentaire sur le contour interne et la deuxième rondelle de frottement 42.

Une rondelle élastique 22 intercalée entre un appui axial 23 solidaire du moyeu 21 et le premier élément presse la première surface de frottement F1 contre la deuxième surface de frottement F2 et le cas échéant, la quatrième surface de frottement F4 contre la troisième surface de frottement F3. L'appui axial 23 est formé par un anneau de retenue fendu fixé sur le moyeu 21.

Selon une autre variante non représentée, le moyeu comprend un colletfaisant saillie radialement vers l'extérieur, et la deuxième surface de frottement est formée sur ce collet.

Sur la figure 8, on voit que l'amortisseur 5 est configuré de sorte qu'une zone de butée C de la portion flexible 17 de chaque bras flexible 14 s'appuie sur le moyeu 21 lorsqu'un angle prédéterminé séparant la position angulaire relative des premier et deuxième éléments 1 et 2 et leur position angulaire relative de repos est atteint. Ainsi, le bras de levier du bras flexible diminue lorsque cet angle prédéterminé est atteint. Ainsi, la raideur élastique angulaire de l'amortisseur augmente lorsque l'angle séparant la position angulaire relative entre le premier élément et le deuxième élément de leur position angulaire relative de repos dépasse cet angle prédéterminé.

La zone de butée C des bras flexibles 14 est une surface plane et le moyeu 21 comprend pour chaque bras flexible 21 un deuxième méplat 26b coopérant avec la zone de butée du bras flexible lorsque l'angle prédéterminé séparant la position angulaire relative des premier et deuxième éléments de leur position angulaire relative de repos est atteint. Ainsi, la surface de contact peut être augmentée et être plane, ce qui diminue la pression de contact et diminue l'usure des bras flexibles lors des phases de butée.

Néanmoins, la première zone d'extrémité libre e1 du bras flexible peut continuer de fléchir (beaucoup plus faiblement), et le premier élément et le deuxième élément peuvent encore tourner (très légèrement) l'un par rapport à l'autre.

Si on le souhaite, une butée rigide (non représentée) peut être mise en œuvre en complément. Le cas échéant, le premier élément 1 porte une première butée angulaire et le deuxième élément 2 porte une deuxième butée angulaire, la première butée angulaire et la deuxième butée angulaire étant apte à venir en appui l'une contre l'autre pour limiter la rotation relative entre le premier élément 1 et le deuxième élément 2.

Comme on peut le voir sur les figures 4 à 6, les deuxièmes méplats 26b sont agencés dans le prolongement des premier méplats 26a. Autrement dit, chaque premier méplat 26a est agencé sur le même plan qu'un deuxième méplat 26b. Cette disposition est bien visible sur la figure 4 qui correspond à la vue selon la coupe 1-1 de la figure 2. On voit aussi sur la partie représentée en zoom qu'il y a un espace radial 29 entre le premier méplat 26a et l'insert 19 de manière à autoriser une rotation relative entre le voile 1 et le moyeu 21. La dimension radiale de l'espace radial correspond à la profondeur du premier méplat 26a.

Le moyeu 21 comprend axialement un premier tronçon T1 autour duquel est monté le premier élément 1 et autour duquel est agencé le dispositif d'hystérésis. Le premier méplat 26a est formé sur ce premier tronçon T1. Le moyeu 21 comporte aussi un deuxième tronçon T2 autour duquel les bras flexibles 14 sont disposés, et sur lequel les deuxièmes méplats 26b sont formés.

Le premier tronçon T1 et le deuxième tronçon T2 sont séparés par un épaulement formé sur le moyeu 21. Cet épaulement sert d'appui axial au dispositif d'hystérésis. Cet épaulement se situe axialement entre le premier méplat 26a et le deuxième méplat 26b. L'épaulement est bien visible sur la figure 5 qui correspond à la vue selon la coupe 2-2 de la figure 6.

Selon un autre mode de réalisation non représenté, chaque rouleau peut se déplacer également sur un autre chemin de roulement porté le deuxième élément 2. Autrement dit, le deuxième élément comprend deux chemins de roulement complémentaires disposés chacun en vis-à-vis d'un chemin de roulement d'un bras flexible, chaque rouleau pouvant rouler conjointement sur le chemin de roulement et le chemin de roulement complémentaire associé. Ainsi le débattement angulaire de l'amortisseur peut être augmenté et il n'est plus nécessaire de fixer rigidement l'axe de rotation du rouleau sur le deuxième élément. Ce type d'agencement est par exemple décrit dans la demande de brevet FR3032248.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », «comprendre» ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Disque d'embrayage (100) pour un véhicule automobile comprenant :
- un organe d'entrée (10) comprenant un disque de friction (11) apte à être pincé par un mécanisme de transmission tel qu'un mécanisme d'embrayage ou un limiteur de couple,
- un organe de sortie (20) comprenant un moyeu (21) apte à transmettre un couple à un arbre de transmission tel qu'un arbre d'entrée de boite de vitesse,
- un amortisseur de torsion (5) autorisant une rotation relative entre l'organe d'entrée (10) et l'organe de sortie (20) selon un axe de rotation (X), ledit amortisseur de torsion comportant un premier élément (1) et un deuxième élément (2) mobiles en rotation l'un par rapport à l'autre autour de l'axe de rotation (X); et au moins deux bras flexibles (14) comportant chacun une portion statique (15) fixée sur l'un parmi le premier élément (1) et le deuxième élément (2) et une portion flexible (17), chaque portion flexible (17) présentant un chemin de roulement (24) coopérant avecun rouleau (18) associé à l'autre parmi le premier élément (1) et le deuxième élément (2) de manière à transmettre un couple et amortir les acyclismes de rotation entre le premier élément (1) et le deuxième élément (2); chaque bras flexible (14) étant agencé de telle sorte que, pour un mouvement rotatif relatif entre les premier et deuxième éléments (1, 2) par rapport à une position angulaire relative de repos, le rouleau (18) se déplace sur le chemin de roulement (24) associé et exerce un effort de flexion sur le bras flexible (14) produisant conjointement une force de réaction apte à rappeler les premier et deuxième éléments (1, 2) vers ladite position angulaire relative de repos ;
**caractérisé en ce que** le premier élément (1) de l'amortisseur de torsion (5) est solidaire en rotation de l'organe d'entrée (10) par rapport à l'axe de rotation X et le deuxième élément (2) de l'amortisseur de torsion (5) est solidaire en rotation du moyeu (21) par rapport à l'axe de rotation Xou bien accouplé à celui-ci par l'intermédiaire d'un pré-amortisseur additionnel.

2. Disque d'embrayage (100) selon la revendication précédente, dans lequel chaque rouleau (18) est monté mobile en rotation autourd'une tige (28) s'étendant le long d'un axe (Y), chaque tige étant fixée sur l'autre parmi le premier élément (1) et le deuxième élément (2).

3. Disque d'embrayage (100) selon l'une des revendications précédentes, dans lequel chaque rouleau (18) est disposé radialement à l'extérieur du chemin de roulement qui lui est associé.

4. Disque d'embrayage (100) selon l'une des revendications précédentes, dans lequel il existe un rayon passant par l'axe de rotation Xet traversant, d'un même côté de l'axe de rotation X, à la fois l'un des rouleaux (18) et deux parties de bras flexibles (14) appartenant à deux bras flexibles (14) distincts.

5. Disque d'embrayage (100) selon l'une des revendications précédentes, dans lequel, dans la position relative de repos, un rayon coupe, d'un même côté de l'axe de rotation X, le chemin de roulement d'un bras flexible, le rouleau coopérant avec ce chemin de roulement, et la portion statique d'un autre bras flexible.

6. Disque d'embrayage (100) selon l'une des revendications précédentes, dans lequel chaque bras flexible (14) comprend une première zone d'extrémité (e1), cette première zone d'extrémité (e1) étant libre et dans lequel la portion statique (15) des bras flexibles (14) est située sur une deuxième zone d'extrémité (e2) des bras flexibles, opposée à la première zone d'extrémité (e1).

7. Disque d'embrayage (100) selon l'une des revendications précédentes, dans lequel, chaque bras flexible (14) comprend sur une face tournée vers l'axe de rotation X, une concavité (12), la géométrie des bras flexibles et de leur concavité étant telle que, dans au moins une position angulaire relative de l'amortisseur, notamment dans la position angulaire relative de repos, une portion du moyeu (21) pénètre dans cette concavité (12).

8. Disque d'embrayage (100) selon l'une des revendications précédentes, dans lequel chaque bras flexible (14) est fixé sur ledit un parmi le premier élément (1) et le deuxième élément (2) au moyen d'une pluralité d'organes de fixation (50), chaque organe de fixation (50) traversant d'une part un trou ménagé dans ledit un parmi le premier élément (1) et le deuxième élément (2) et d'autre part un trou ménagé dans la portion statique (15) de l'un des bras flexibles (14), les organes de fixation (50) étant des rivets, chaque rivet comprenant un collet (51) intercalé axialement entre ledit un parmi le premier élément (1) et le deuxième élément (2), et la portion statique (15) du bras flexible (14).

9. Disque d'embrayage (100) selon l'une des revendications précédentes, dans lequel le deuxième élément est solidaire en rotation du moyeu de sorte que le disque d'embrayage est dépourvu de pré-amortisseur additionnel, la forme des bras flexibles et leur chemin de roulement étant configurés pourobtenirune raideur inférieure à 2 Nm/°, en particulier inférieure à 1 Nm/° au voisinage de la position angulaire relative de repos, notamment dans une plage de débattement angulaire inférieure à 10 degrés, en particulier inférieure à 6 degrés, d'un côté et/ou de l'autre côté de la position angulaire relative de repos.

10. Disque d'embrayage (100) selon l'une des revendications précédentes, dans lequel le disque d'embrayage (100) comprend un élément de guidage (19) monté solidaire en rotation du premier élément (1) sur une portion radialement interne du premier élément (1), l'élément de guidage (19) étant monté rotatif autourdu moyeu (21).

11. Disque d'embrayage (100) selon la revendication précédente, dans lequel l'élément de guidage (19) est un insert en plastique (19) surmoulé autourd'une portion radialement interne du premier élément (1).

12. Disque d'embrayage (100) selon l'une des revendications précédentes, dans lequel le disque d'embrayage comprend un dispositif d'hystérésis, le dispositif d'hystérésis comprenant une première surface de frottement (F1) associée au premier élément et une deuxième surface de frottement (F2) associée au moyeu (21), la première surface de frottement et la deuxième surface de frottement étant disposées de manière à frotter l'une contre l'autre lorsque le premier élément et le moyeu tournent l'un par rapport à l'autre par rapport à l'axe de rotation X, la deuxième surface de frottement étant agencée sur une première rondelle de frottement41, montée solidaire en rotation du moyeu (21) par complémentarité de forme non circulaire, le moyeu comprenant un premier méplat (26a) et la première rondelle de frottement (41) comprenant un premier méplat complémentaire sur son contour interne.

13. Disque d'embrayage (100) selon l'une des revendications précédentes, dans lequel l'amortisseur est configuré de sorte qu'une zone de butée (C) de la portion flexible (17) de chaque bras flexible (14) s'appuie sur le moyeu (21) lorsqu'un angle prédéterminé séparant la position angulaire relative des premier et deuxième éléments (1, 2) et leur position angulaire relative de repos est atteint.

14. Disque d'embrayage (100) selon l'une des revendications précédentes, dans lequel les bras flexibles (14) sont fixés sur le premier élément (1) et les rouleaux (18) sont associés au deuxième élément (2).

15. Amortisseur de torsion (5), comportant un premier élément (1) et un deuxième élément (2) mobiles en rotation l'un par rapport à l'autre autour d'un axe de rotation (X); et deux bras flexibles (14) fixés au premier élément (1), les bras flexibles (14) comportant chacun une portion statique (15) fixée sur ledit premier élément (1) et une portion flexible (17), chaque portion flexible (17) présentant un chemin de roulement (24) coopérant avec un rouleau (18) associé au deuxième élément (2) de manière à transmettre un couple et amortir les acyclismes de rotation entre le premier élément (1) et le deuxième élément (2); chaque bras flexible (14) étant agencé de telle sorte que, pour un mouvement rotatif relatif entre les premier et deuxième éléments (1, 2) par rapport à une position angulaire relative de repos, le rouleau (18) se déplace sur le chemin de roulement (24) et exerce un effort de flexion sur le bras flexible (14) produisant conjointement une force de réaction apte à rappeler les premier et deuxième éléments (1, 2) vers ladite position angulaire relative de repos; **caractérisé en ce que** l'amortisseur comprend un premier bras flexible et un deuxième bras flexible, un premier rouleau coopérant avec le premier bras flexible et un deuxième rouleau coopérantavecle deuxième bras flexible, eten ce que, lorsque l'amortisseur est au repos, dans un plan comprenant l'axe de rotation X et passant par le premier rouleau, le premier rouleau est agencé radialement entre le premier bras flexible et le deuxième bras flexible, et le premier bras flexible est agencé radialement entre l'axe de rotation X et le premier rouleau.
